# EUROPÄISCHE PATENTSCHRIFT

(11) **EP 1 280 267 B1**
(45) Veröffentlichungstag und Bekanntmachung des Hinweises auf die Patenterteilung: **21.09.2011**
(21) Anmeldenummer: 02450164.5
(22) Anmeldetag: 24.07.2002
(51) Int. Cl.: H02P 7/00

(54) **Universeller elektronischer Leistungssteller mit variabler Zwischenkreisspannung**
Universal electronic power regulation device with variable intermediate link voltage
Dispositif électronique universelle de réglage de puissance avec un circuit intermédiaire de tension variable

(30) Priorität: 25.07.2001 AT 11522001
(43) Veröffentlichungstag der Anmeldung: 29.01.2003
(73) Patentinhaber: Poisel, Herbert, 5020 Salzburg (AT); Mondial Electronic Ges.m.b.H., 5142 Eggelsberg (AT); Dicker, Franz Josef, Ing., 5142 Eggelsberg 37 (AT)
(72) Erfinder: Silber, Siegfried, 4202 Kirchschlag (AT); Reisinger, Martin, 4072 Alkoven (AT)
(74) Vertreter: Babeluk, Michael

(56) Entgegenhaltungen:
- FR-A- 2 729 016
- US-A- 5 929 592
- PATENT ABSTRACTS OF JAPAN Bd. 0121, Nr. 01 (E-595), 2. April 1988 (1988-04-02) -& JP 62 233069 A (MITSUBISHI ELECTRIC CORP), 13. Oktober 1987 (1987-10-13)
- PATENT ABSTRACTS OF JAPAN Bd. 1999, Nr. 08, 30. Juni 1999 (1999-06-30) -& JP 11 069839 A (TOSHIBA CORP), 9. März 1999 (1999-03-09)

## Beschreibung

Die Erfindung betrifft einen universellen elektronischen Leistungssteller, insbesonders für die Ansteuerung von ein- oder zweisträngigen Wechsel- bzw. Drehfeldmotoren mit Hilfsstrang an einphasigen Wechsel- oder Gleichspannungsnetzen, mit zwei Halbbrücken, mit jeweils zwei steuerbaren elektrischen Halbleiterschaltern und zwei Dioden, sowie mit einem zwischen den Halbbrücken eingeschalteten Kondensator. Derartige elektronische Schaltungen dienen zur stufenlosen Veränderung der Spannung an einem oder mehreren Verbrauchern, zwecks Veränderung des Leistungsflusses durch diese Verbraucher, wobei eine Versorgung des Leistungsstellers mit Gleichspannung, Wechselspannung oder Gleichspannung mit überlagertem Wechselanteil möglich ist. Einschlägige Leistungssteller des Stands der Technik sind den Dokumenten JP 62 233069 A und JP 11069839 A zu entnehmen.

Eine Variation des Leistungsflusses durch eine Last wird im Wechselspannungsnetz häufig mit Hilfe einer Phasenanschnittsteuerung durchgeführt. Bei dieser Schaltung wird ein TRIAC (oder Thyristor) eine bestimmte Zeit nach dem Spannungsnulldurchgang eingeschaltet und beim Nulldurchgang des Stromes wieder ausgeschaltet, wodurch der Effektivwert der Wechselspannung am Verbraucher (der Last) verändert werden kann. Ein wesentlicher Nachteil dieser Schaltung ist, dass die Spannung - und damit auch der Strom - am Verbraucher einen sehr hohen Oberschwingungsanteil besitzt. Ist der Verbraucher ein Motor (z.B. eine Asynchronmaschine mit Widerstandsläufer), verursachen die Stromoberschwingungen Pendelmomente, die unerwünschte Geräusche zur Folge haben.

Als weitere bekannte Schaltungsvariante zur Variation des Leistungsflusses kann, wie eingangs angesprochen, ein Umrichter mit Gleichspannungszwischenkreis verwendet werden. Üblicherweise wird die Wechselspannung mit Hilfe eines ungesteuerten Gleichrichters gleichgerichtet. Diese Gleichspannung (Zwischenkreisspannung) wird mittels eines Elektrolytkondensators geglättet. Lastseitig verwendet man Leistungshalbleiter, beispielsweise MOSFETs, IGBTs oder Transistoren, die so angesteuert werden, dass die Spannungsform einem sinusförmigen Verlauf angenähert wird. Die wesentlichen Nachteile dieser Schaltung ergeben sich neben der aufwendigen Signalelektronik aus dem Gleichspannungszwischenkreis. Insbesondere haben die erforderlichen Elektrolytkondensatoren speziell bei hohen Umgebungstemperaturen eine begrenzte Lebensdauer. Weiters werden die Zwischenkreiskondensatoren nur dann geladen, wenn der Betrag der Netzspannung diese Gleichspannung übersteigt. Dies führt zu hohen netzseitigen Ladeströmen, die sich auf kurze Zeiten innerhalb der Netzperiode beschränken. Die Folge ist ein hoher Oberschwingungsgehalt des Eingangstromes, der bereits bei einer relativ kleinen Wirkleistungsaufnahme nicht mehr konform mit der Norm EN61000-3-2 ist.

Die durch die Erfindung zu lösende Aufgabe besteht in der Ermöglichung einer separaten stufenlosen Stellung der Spannungen an einer oder mehreren Lasten, so dass der aufgenommene Strom einen geringen Oberschwingungsgehalt besitzt und somit mit der Norm EN61000-3-2 konform ist, wobei weiters möglich sein soll, auf einen großen Kondensator im Zwischenkreis zur Glättung der Spannung verzichten zu können.

Diese Aufgabe wird gemäß der vorliegenden Erfindung bei einem Leistungssteller der eingangs genannten Art dadurch gelöst, dass zumindest eine weitere Habbrücke vorgesehen ist, dass eine der Halbbrücken an einem gemeinsamen Punkt sowohl an die Last oder Lasten als auch an das Netz, eine Halbbrücke nur an das Netz und jeweils eine Halbbrücke nur an jeweils eine Last angeschlossen ist, und dass der Kondensator an den gemeinsamen Verschaltungspunkten aller Halbbrücken angeschlossen ist. Der hier nun zu verwendende Kondensator kann im Gegensatz zum Zwischenkreiskondensator gemäß eingangs angesprochenem Stande der Technik hinsichtlich seiner Kapazität so gewählt werden, dass er lediglich ausreichend die transienten Spannungsspitzen, verursacht insbesonders von Netz- und Lastinduktivitäten, begrenzt und im übrigen so klein ist, dass er während der Zeit, in der die an die Last sowie auch die an das Netz angeschlossene Halbbrücke gleichen Schaltzustand aufweisen, nur bis zu einer von den Halbleiterschaltern vorgegebenen Grenzspannung geladen wird. Eine sinusförmige Ausgangsspannung muss dabei nicht aus einer konstanten Gleichspannung nachgebildet werden. Es muss dafür lediglich die Amplitude der Zwischenkreisspannung geändert und vorzeichenrichtig an den Ausgang geschaltet werden. Insgesamt ergibt sich damit ein sehr geringer Oberschwingungsgehalt des Eingangstroms mit dem zusätzlichen Vorteil, dass der verwendete Kondensator sehr klein und damit kostengünstig ausgeführt werden kann.

Gemäß einer weiteren Ausgestaltung der Erfindung ist die der jeweiligen Last zugeordnete Halbbrücke so angesteuert, dass seine Modulation der an der Last anliegenden Spannung erfolgt, wobei diese Modulation der Lastspannung unabhängig von den restlichen Lasten erfolgt. In einer zusatslichen Ausgestaltung ist die der jeweiligen Last zugeordnete Halbbrücke mit einer Ansteuerfrequenz gleich oder größer der Netzfrequenz angesteuert. Damit kann die mittlere Ausgangsspannung sehr einfach in den Grenzen zwischen Null und Versorgungsspannung eingestellt werden, wobei in vorteilhafter Weise bei ohmsch-induktiven Lasten der Ausgangsstrom nur einen geringen Oberschwingungsgehalt aufweist, was insbesonders bei Motoren eine wesentliche Verbesserung der Laufruhe im Vergleich zur Phasenanschnittsteuerung ermöglicht.

Die dem Netz zugeordnete Halbbrücke sowie auch die dem Netz und der Last zugeordnete Halbbrücke werden so angesteuert, dass die Wechselspannung des Netzes gleichgerichtet wird, wobei der Umschaltvorgang im Spannungsnulldurchgang der Netzspannung erfolgt, womit eine Vollbrückengleichrichtung entsteht. Die Amplitude an der mittleren Spannung der Last folgt direkt proportional dem Puls-Pausenverhältnis der Ansteuerung. Mit dem Umschalten der zur Gleichrichtung verwendeten netzseitigen Halbbrücke sowie der netz- und lastseitigen Halbbrükke erfolgt eine Invertierung der Ansteuersignale der lastseitigen Halbbrücken. Der Eingangsstrom des erfindungsgemäßen Leistungsstellers entspricht der Summe aus den Strömen der Lasten und dem Kondensatorstrom - bei vernachlässigbarem Kondensatorstrom folgt der Netzstrom der Summe der Ströme in den Lasten. Bei sinusförmigen Strömen in den Lasten bleibt auch der Netzstrom weitgehend oberschwingungsfrei.

Sehr vorteilhaft ergibt sich beim erfindungsgemäßen Leistungssteller weiters, dass bei generatorischem Betrieb der Lasten eine Energierückspeisung ins Netz erfolgt.

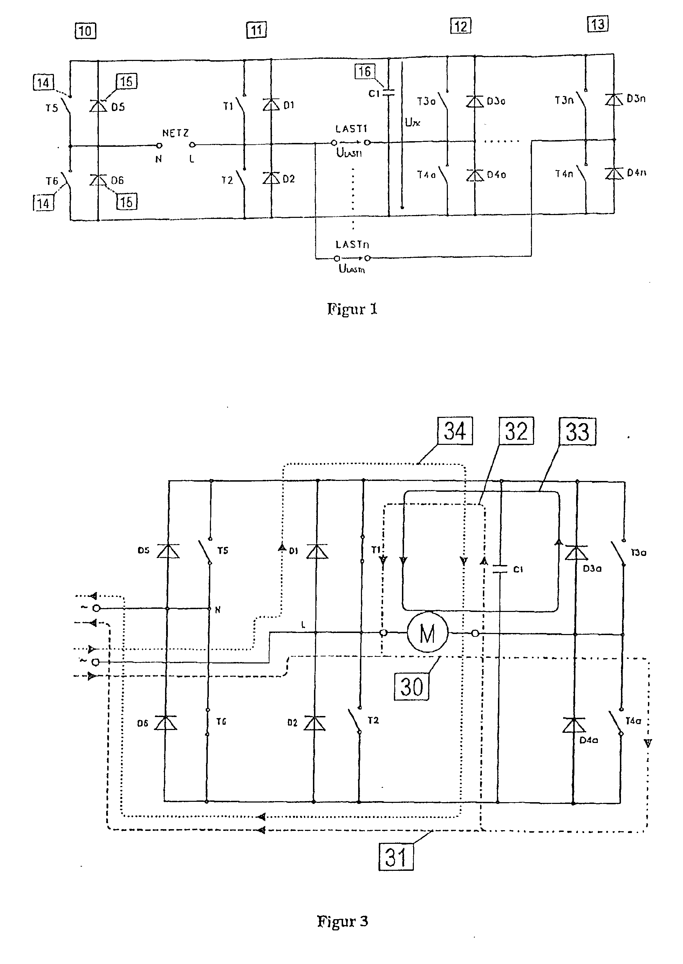

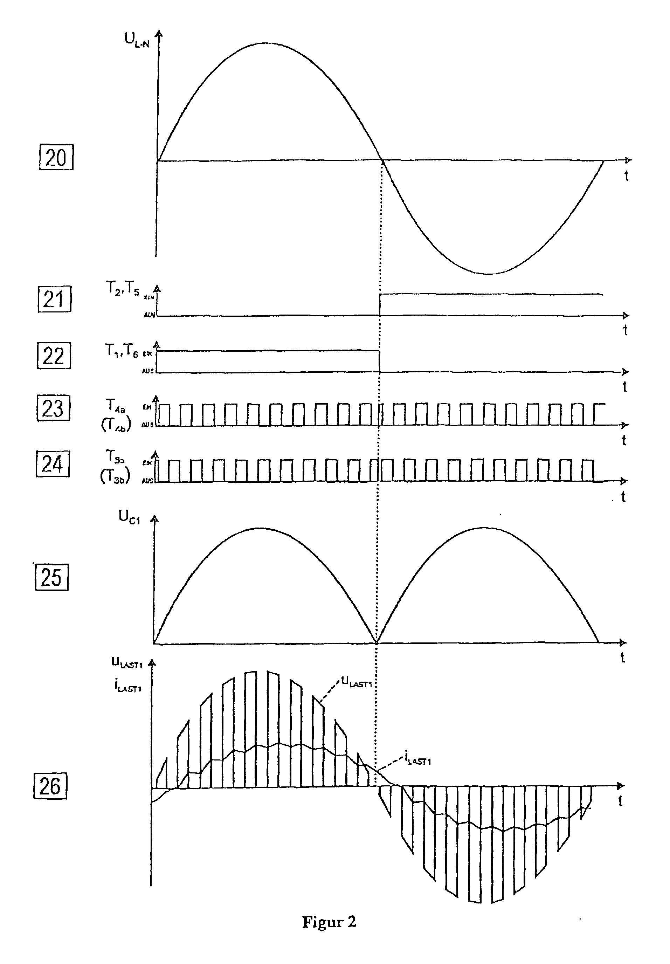

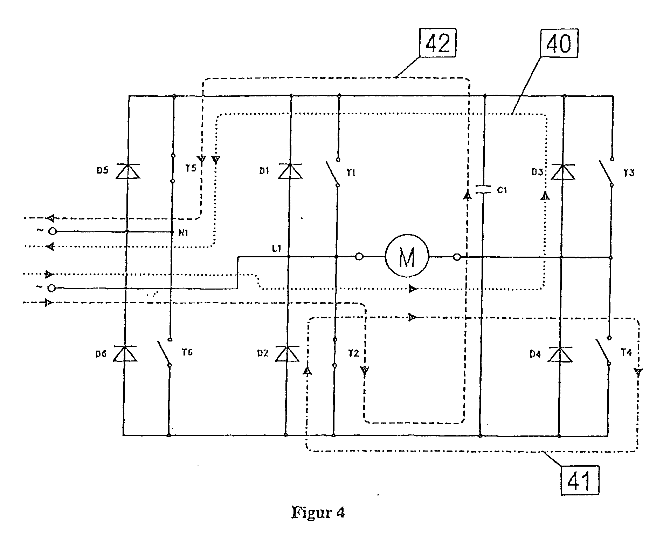

Die Erfindung wird im folgenden noch anhand der in der Zeichnung schematisch dargestellten Ausführungsbeispiele näher erläutert. Fig. 1 zeigt dabei die Grundstruktur der elektronischen Schaltung eines erfindungsgemäßen Leistungsstellers, Fig. 2 die Ansteuerung der einzelnen Halbbrücken eines Leistungsstellers gemäß Fig. 1 für eine sinusförmige Eingangsspannung, Fig. 3 ein weiters Ausführungsbeispiel eines erfindungsgemäßen Leistungsstellers in einer Darstellung ähnlich Fig. 1 und Fig. 4 den Leistungssteller aus Fig. 3 in anderem Schaltzustand.

Die Grundstruktur der elektronischen Schaltung ist in Fig. 1 dargestellt. Die Schaltung besteht aus drei oder mehr Halbbrücken (10, 11, 12 und 13), jeweils aufgebaut aus zwei schnellen elektronischen Schaltelementen für unidirektionale Stromrichtung (14), beispielsweise IGBTs, MOSFETs oder Transistoren, und zwei Freilaufdioden (15). Die Halbbrücken sind so angeordnet, dass eine Halbbrücke (10) nur an das Netz angeschlossen ist, jeweils eine Halbbrücke (12, 13) mit jeweils einer Last verbunden ist und eine Halbbrücke (11) am gemeinsamen Verbindungspunkt sowohl an das Netz als auch an die Lasten angeschlossen ist.

Die Ansteuerung der einzelnen Halbbrücken ist in Fig. 2 für eine sinusförmige Eingangsspannung dargestellt. Die Ansteuerung der Halbbrücke 10 erfolgt so, dass während der ersten Hälfte der Netzperiode der obere Schalter T5 aus- und der untere Schalter T6 eingeschaltet ist, wie in 21 und 22 gezeigt. Die Halbbrücke 11 wird hingegen genau invertiert dazu angesteuert. D.h. während der ersten Halbperiode ist der obere Schalter T1 ein, der untere Schalter T2 ausgeschaltet (21, 22). Die Spannung am Kondensator C1 entspricht damit gerade der gleichgerichteten Netzspannung (25).

Die Ansteuerung der mit den Lasten verbundenen Halbbrücken (12, 13) erfolgt so, dass diese mit einer im Verhältnis zur Netzfrequenz hohen Frequenz ein- und ausgeschaltet werden (23, 24), sodass die mittlere Ausgangsspannung in den Grenzen zwischen Null und der Versorgungsspannung, zum Beispiel durch eine Verstellung des Puls-Pausenverhältnisses (PWM), eingestellt werden kann. Zu beachten ist dabei, dass dieses Ansteuersignal genau im Nulldurchgang der Versorgungsspannung, d.h. beim Übergang der ersten in die zweite Halbperiode, invertiert werden muss. Vorteilhaft bei dieser Ansteuermethode ist, dass bei ohmsch-induktiven Lasten der Ausgangsstrom i_{Last1} (dargestellt in 26) nur einen geringen Oberschwingungsgehalt aufweist. Insbesondere bei Motoren kann damit eine wesentliche Verbesserung der Laufruhe im Vergleich zur Phasenanschnittsteuerung erzielt werden. Die Ausgangsspannung u_{Last1} an der Last 1 (26) wird während der ersten Halbperiode jeweils zwischen Null und der Spannung am Kondensator C1 umgeschaltet. Während der zweiten Halbperiode erfolgt die Umschaltung immer zwischen Null und der negativen Kondensatorspannung.

Zur detaillierteren Beschreibung dieser Schaltung wird nur eine Last in Form eines Asynchronmotors mit einem mittleren Energiefluß in Richtung der Last angenommen, wie in Fig. 3 gezeigt. Während der ersten Halbperiode (Netzspannung U_{L-N} ist positiv) sind die Schalter T1 und T6 geschlossen, T2 und T5 geöffnet. Ist der gesteuerte LeistungsschalterT4a geschlossen, liegt die Netzspannung am Motor an. Der Motorstrom 30 wird durch eine Überlagerung des Stromanteiles aus dem Netz 31 und des Stromanteiles aus dem Kondensator 32 gebildet. Sobald der Schalter T4a geöffnet wird, kommutiert der Motorstrom auf den Freilaufkreis 33 der aus der Diode D3a und dem Schalter T1 besteht. Der Strom aus dem Netz, der aufgrund der Induktivität des Versorgungsnetzes keine sprunghaften Änderungen durchführen kann, schließt sich in der Zeit über den Kondensator C1 (34). Der Kapazitätswert des Kondensators C1 kann so klein gewählt werden, dass der Kondensator während der Zeit in der T4a geöffnet ist, bis zu einer bestimmten Grenzspannung geladen wird.

Durch die Phasenverschiebung zwischen Motorstrom und Motorspannung, aufgrund der Induktivität des Motors, bleibt diese Stromrichtung für eine gewisse Zeit erhalten nachdem die Netzspannung bereits die Polarität geändert hat und damit anstelle von T1 und T6 die beiden Schalter T2 und T5 geschlossen sind. Während dieser Zeit speist der Motor Energie in das Netz zurück solange T4a geöffnet ist, wie aus dem Motorstrom 40 in Fig. 4 ersichtlich ist. Wenn der Schalter T4a geschlossen und T3a geöffnet ist, fließt der Motorstrom durch den Schalter T4a und über die Diode D2 (41). Gleichzeitig fließt der Netzstrom über den Kondensator C1 (42).

Der erfindungsgemäße elektronische Leistungssteller kann auch für eine mittlere Energieflussrichtung von der Last zum Netz eingesetzt werden.

## Patentansprüche

1. Universeller elektronischer Leistungssteller, insbesondere für die Ansteuerung von ein- oder zweisträngigen Wechsel- bzw. Drehfeldmotoren (M) mit Hilfsstrang an einphasigen Wechsel- oder Gleichspannungsnetzen mit mindestens drei Halbbrücken (10, 11, 12, 13) mit jeweils zwei steuerbaren elektrischen Halbleiterschaltern (T1, T2, T3, T4, T5, T6) und zwei Dioden (D1, D2, D3, D4, D5, D6) sowie mit einem zwischen den Halbbrücken (10, 11, 12, 13) eingeschalteten Kondensator (C1), **dadurch gekennzeichnet, dass** eine der Halbbrücken (11) an einem gemeinsamen Punkt sowohl an die Last oder Lasten (Last 1, Last 2, Last 3, ... Last n) als auch das Netz, eine Halbbrücke (10) nur an das Netz und jeweils eine Halbbrücke (12, 13) nur an jeweils eine Last angeschlossen ist, und dass der Kondensator (C1) an den gemeinsamen Verschaltungspunkten aller Halbbrücken (10-13) angeschlossen ist.

2. Leistungssteller nach Anspruch 1, **dadurch gekennzeichnet, dass** die der jeweiligen Last (Last 1 - Last n) zugeordnete Halbbrücke (12, 13) so angesteuert ist, dass eine Modulation der an der Last anliegenden Spannung (U_{Lat 1} - U_{Last n}) erfolgt, wobei diese Modulation der Lastspannung unabhängig von den restlichen Lasten erfolgt.

3. Leistungssteller nach Anspruch 1 oder 2, **dadurch gekennzeichnet, dass** die der jeweiligen Last (Last 1 - Last n) zugeordnete Halbbrücke (10, 13) so angesteuert ist, dass die Ansteuerfrequenz gleich oder größer der Netzfrequenz ist.

## Claims

1. Universal electronic power control unit, in particular for control of single-phase or two-phase AC or induction motors (M) with auxiliary winding running on single-phase AC or DC voltage mains, with at least three half-bridges (10, 11, 12, 13) each with two controllable electrical semiconductor switches (T1, T2, T3, T4, T5, T6) and two diodes (D1, D2, D3, D4, D5, D6) and with a capacitor (C1) connected between the half-bridges (10, 11, 12, 13), **characterised in that** one of the half-bridges (11) is connected at a common point to the load or loads (Load 1, Load 2, Load 3,... Load n) as well as to the mains, while one half-bridge (10) is connected only to the mains and one half-bridge each (12, 13) is connected only to an individual load, and that the capacitor (C1) is connected to the common points of all half-bridges (10 - 13).

2. Power control unit according to claim 1, **characterised in that** the half-bridges (12, 13) assigned to the individual loads (Load 1 - Load n) are controlled such that the voltage (U_{Last1} - U_{Lastn}) applied at the individual load is modulated, this load voltage modulation being independent of the other loads.

3. Power control unit according to claim 1 or 2, **characterised in that** the half-bridge (10, 13) assigned to the individual load (Load 1 - Load n) is controlled such that the controller frequency is equal to or greater than the mains frequency.

## Revendications

1. Dispositif électronique universel de réglage de puissance, notamment pour la commande de moteurs (M) à champ alternatif ou champ tournant à une ou deux lignes et une ligne auxiliaire reliée à des réseaux monophasés de tension alternative ou continue, avec au moins trois demi-ponts (10, 11, 12, 13), avec chaque fois deux commutateurs semi-conducteurs commandés (T1, T2, T3, T4, T5, T6) et deux diodes (D1, D2, D3, D4, D5, D6) ainsi qu'avec un condensateur (C1) branché entre les demi-ponts (10, 11, 12, 13),
dispositif **caractérisé en ce que**
l'un des demi-ponts (11) est relié à un point commun à la fois à la ou aux charges, (charge 1, charge 2, charge 3, ... charge n) et au réseau, un demi-pont (10) étant raccordé seulement au réseau et chaque fois un demi-pont (12, 13) est raccordé seulement à une charge respective, et
le condensateur (C1) est relié aux points de branchement commun de tous les demi-ponts (10-13).

2. Dispositif de réglage de puissance selon la revendication 1,
**caractérisé en ce que**
le demi-pont (12, 13) associé à la charge respective (charge 1 - charge n) est commandé pour faire une modulation de la tension (U_{Last 1} - U_{Last n}) appliquée à la charge,
* cette modulation de la tension de charge se faisant indépendamment des autres charges restant.

3. Dispositif de réglage de puissance selon la revendication 1 ou 2,
**caractérisé en ce que**
le demi-pont (10, 13) associé à la charge respective (charge 1 - charge n) est commandé pour que la fréquence de commande soit égale ou supérieure à la fréquence du réseau.
